# EUROPEAN PATENT APPLICATION

(11) **EP 1 655 420 A2**
(43) Date of publication of application: **10.05.2006**
(21) Application number: 05425016.2
(22) Date of filing: 18.01.2005
(51) Int. Cl.: E04C 2/42, E04H 4/12

(54) **Manufacturing process of an anti-slip grid used for swimming pool flooring**

(30) Priority: 04.11.2004 IT MC20040131
(71) Applicant: MUFLE S.P.A., 60022 Castelfidardo AN (IT)
(72) Inventor: Papa, Walter, 60025 Loreto (AN) (IT)
(74) Representative: Baldi, Claudio

(57) **Abstract**

The present invention refers to a manufacturing process of anti-slip grids used for swimming pool flooring; the grids are obtained from a single plastic piece and have a series of moulded anti-slip blocks on the walking surface, each block being partially contained into a corresponding housing.

## Description

The present patent application refers to a manufacturing process for the production of anti-slip grids used for swimming pool flooring and, more generally, of all walking surfaces where a layer of water is likely to form and stagnate.

It is understood that the patent protection is also be extended to the grid obtained with the process of the invention.

Currently, grids for swimming pool flooring are available in two different models according to the material used, that is to say rubber or plastic.

Rubber grids are mainly formed of square or rectangular panels laid in parallel position one next to the other, like normal ceramic tile flooring, while plastic grids are usually provided with connection means in order to be fit one to the other in a puzzle-like structure.

Although rubber grids are safer in terms of anti-slip properties, their application is impaired with respect to plastic grids by considerable cost and poor versatility in terms of combination and connection.

In order to give anti-slip properties to plastic grids, their walking surface is usually roughened by means of a wrinkled porous finish to ensure a higher grip for the user's feet or sandals also in the presence of humidity or a thin layer of water.

In any case, it must be noted that rubber grids are indisputably better that plastic grids in terms of safety characteristics.

The purpose of the present invention is to obtain a plastic grid characterised by the same anti-slip properties as rubber grids, while still maintaining the peculiarities and advantages of plastic grids.

A further purpose of the invention is to devise an economically convenient process for the production of safe plastic anti-slip grids.

The present invention is based on the application of a series of blocks of moulded rubber or other equivalent anti-slip material on the walking surface of an ordinary plastic grid.

Each block is partially contained in a corresponding cavity or frame, in such a way that it slightly projects above the edges of the said cavity or frame.

In other words, it can be said that the base of the blocks is circumscribed and protected inside a perimeter border that acts as a sort of "bumper" to absorb, and including eliminate, the transversal shocks otherwise suffered by the lateral sides of the blocks.

Evidently, the most immediate effect of the said transversal shocks is the generation of stresses that favour the instantaneous or in any case gradual detachment of the base of the block from its supporting surface.

The idea of containing each block into a corresponding housing aims at avoiding this risk, thus increasing the life of the plastic grid of the invention.

According to the process of the invention, the rubber blocks are directly moulded on the pre-moulded plastic grid, which is suitably provided with one or more holes on the bottom wall of the cavities housing the blocks, in which fluid rubber can flow, stagnate and consolidate, thus originating a sort of "button" that ensures the stable fastening of each rubber block to the plastic grid.

For major clarity the description of the anti-slip grid of the invention continues with reference to the enclosed drawings, which are intended for purposes of illustration only, and not in a limiting sense, whereby:

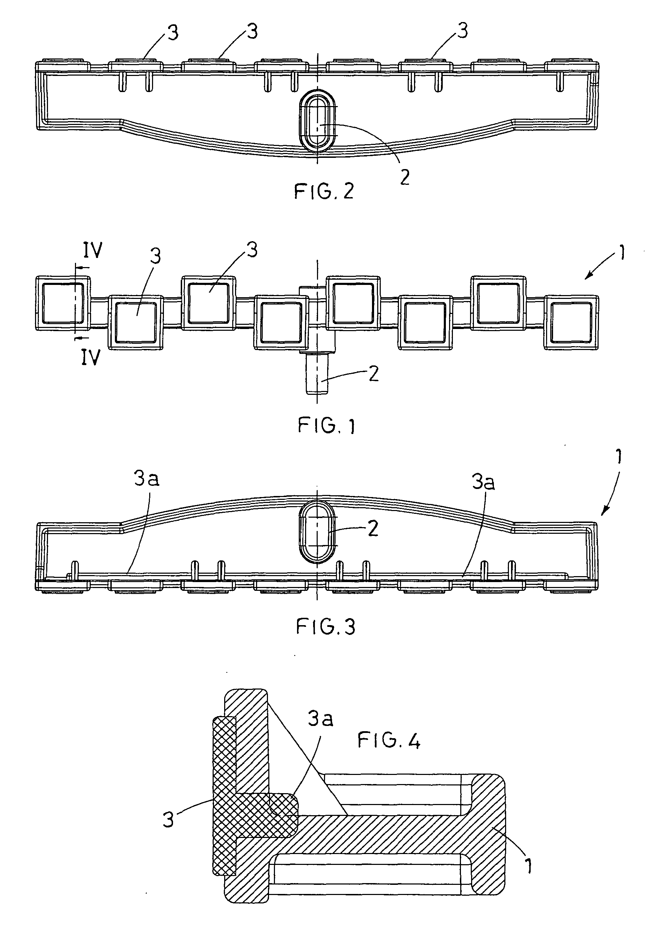

- Figure 1 is a top view of a plastic grid obtained with the process of the invention;
- Figure 2 is a view of one of the two sides of the grid shown in Figure 1;
- Figure 3 is a view of the other side of the grid shown in Figure 1;
- Figure 4 is a cross-section of Figure 1 with plane IV-IV;

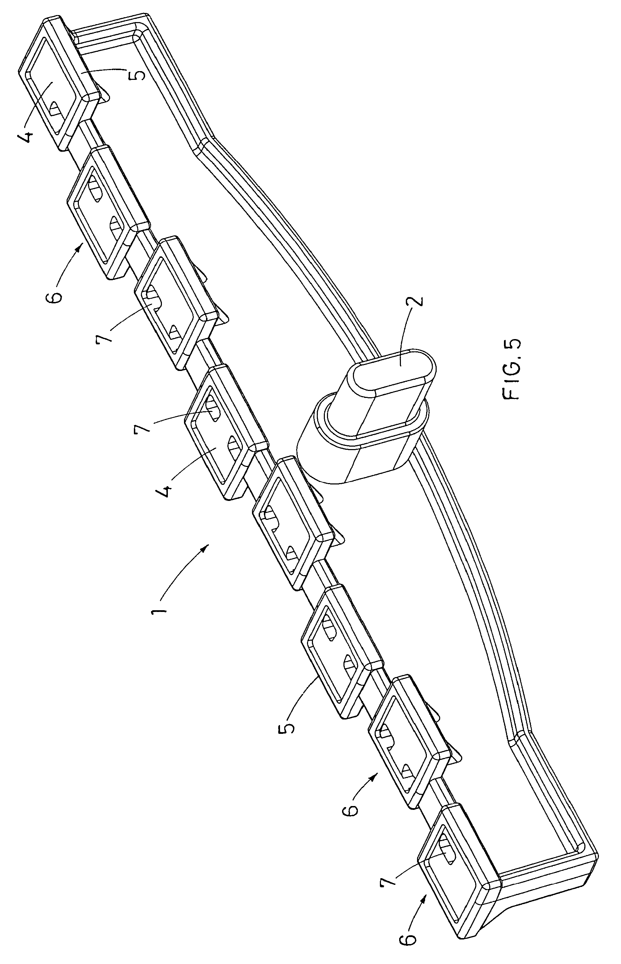

- Figure 5 is an axonometric view of the grid shown in Figure 1.

With reference to the aforementioned figures, the grid (1) of the invention is a plastic moulded grid provided with means (2) used to match and connect it with other grids of the same type to form a puzzle-like structure for floorings and pavements.

The peculiarity of the grid (1) of the invention is the presence of a series of moulded anti-slip blocks (3) on the walking surface, each of them being partially contained in a corresponding cavity (4) or frame (5) in such a way that it slightly projects over the edges of the said cavity (4) or frame (5).

The bottom wall of each housing (6) of the blocks (3) is provided with one or more through slots (7).

The manufacturing process of the grid of the invention includes the following sequences of operational steps:
- moulding, according to conventional technologies, of a single-pieced plastic grid (1), whose walking surface is provided with housings (6) and through slots (7) on the bottom wall of each housing (6);
- moulding of blocks (3) directly inside each housing (6) of the grid (1), in such a way that the moulding material of each block (3) can flow, stagnate and consolidate beyond the through slots (7).

According to the preferred embodiment of the grid (1), the blocks (3) are connected by means of a rubber cord (3a) that is situated and hidden under the housings (6) to ensure stronger fastening of each block (3).

## Claims

1. Manufacturing process of an anti-slip grid, **characterised in that** it includes the following sequence of operational steps:
- moulding, according to conventional technologies, of a single-pieced plastic grid (1), whose walking surface is provided with housings (6);
- moulding of blocks (3) made of anti-slip material directly inside each housing (6) of the grid (1).

2. Process as defined in the above claim, **characterised in that** one or more slots (7) are obtained on the bottom wall of each housing (6) when moulding the grid (1) of the invention.

3. Process as defined in the above claims, **characterised in that** the housings (6) consist in cavities (4) or raised frames (5) on the walking surface of the grid (1) of the invention.

4. Flooring anti-slip grid, **characterised in that** it consists in a plastic moulded grid (1), whose walking surface is provided with a series of blocks (3) of moulded anti-slip material, each block being partially contained into a corresponding cavity (4) or raised frame (5), in such a way that it slightly projects over the edges of the cavity (4) or frame (5).

5. Flooring anti-slip grid as defined in the above claim, **characterised in that** the bottom wall of each housing (6) of the blocks (3) is provided with one or more through slots (7).

6. Grid and process as defined in the above claims, **characterised in that** the anti-slip blocks (3) are made of rubber.
